# EUROPÄISCHE PATENTSCHRIFT

(11) **EP 2 806 174 B1**
(45) Veröffentlichungstag und Bekanntmachung des Hinweises auf die Patenterteilung: **22.07.2015**
(21) Anmeldenummer: 13169134.7
(22) Anmeldetag: 24.05.2013
(51) Int. Cl.: F16B 25/00

(54) **Schraubelement**
Screw element
Elément de vis

(43) Veröffentlichungstag der Anmeldung: 26.11.2014
(73) Patentinhaber: SPAX International GmbH & Co. KG, 58256 Ennepetal (DE)
(72) Erfinder: Langewiesche, Frank, 45549 Sprockhövel (DE)
(74) Vertreter: Patentanwälte Dr. Solf & Zapf

(56) Entgegenhaltungen:
- EP-A2- 1 411 252
- DE-U1-202007 011 292
- DE-U1-202010 005 255
- DE-U1-202010 010 250
- US-A1- 2009 110 515

## Beschreibung

Die vorliegende Erfindung betrifft ein Schraubelement gemäß dem Oberbegriff des Anspruchs 1.

Ein gattungsgemäßes Schraubelement ist in der EP 1 411 252 A2 beschrieben. Ein derartiges Schraubelement dient insbesondere zum Einschrauben in unterschiedlichste Werkstoffe, wie Holz und Kunststoff, und zwar ohne vorhergehendes Vorbohren eines Kernloches. Das Schraubelement wird unmittelbar in das jeweilige Material eingeschraubt, wobei ein Verdrängungseffekt erreicht wird, indem zunächst die Gewindespitze in das Material eindringt. Das bis zum in Einschraubrichtung vorderen Ende verlaufende Gewinde wirkt als Greifspitze, um ein gutes Eingreifen und Eindringen des Schraubelements mit geringer axialer Druckkraft, also hauptsächlich allein durch die Rotation zu erreichen. Bei dem bekannten Schraubelement soll sich der Bereich mit dem polygonalen Kernquerschnitt jeweils bis zu dem endseitigen vorderen Ende der Gewindespitze erstrecken. Zudem soll der polygonale Kernquerschnitt konvex gewölbte Seitenflächen sowie Ecken aufweisen, die ebenfalls abgerundet sein können. Die Polygonecken liegen auf einem Hüllkreis, dessen Durchmesser kleiner/gleich, insbesondere aber auch gleich dem Durchmesser des zylindrischen Schaftkerns des Gewindeschaftes sein kann. Dabei soll mit dem bekannten Verbindungselement erreicht werden, dass beim Einschrauben eine Spanbildung weitgehend vermieden wird, indem die selbstbohrende Wirkung des Verbindungselementes darauf beruht, dass sich die Gewindespitze auf Grund ihres polygonalen Kernquerschnitts in das Material hineindrückt, wobei eine radiale Verdrängungswirkung durch bei Rotation auf- und abschwellende Momente erreicht wird.

Bei diesem bekannten Schraubelement treten jedoch insbesondere beim Einschrauben in Hartholz auf Grund des Verdrängungseffektes der im Querschnitt polygonalen Schraubenspitze Spleißerscheinungen auf. Zudem ist beim anfänglichen Einschrauben eine relativ hohe Axialkraft erforderlich, damit die Schraubenspitze mit dem Gewinde greift.

Der vorliegenden Erfindung liegt die Aufgabe zu Grunde, ein gattungsgemäßes Schraubelement hinsichtlich seiner Eigenschaften weiter zu verbessern, insbesondere Spleißerscheinungen weitgehend zu vermeiden und die Axialkräfte für das Einschrauben weiter zu reduzieren.

Erfindungsgemäß wird dies durch die Merkmale des kennzeichnenden Teils des Anspruchs 1 erreicht. Durch die kombinatorische Verbindung des in Einschraubrichtung gesehen vorderen, sich verjüngenden Spitzenabschnittes mit der sich daran anschließenden radial gerichteten Stirnflächenkante, die als Schneid- bzw. Fräskante wirkt, und des sich an den vorderen Abschnitt anschließenden polygonalen Spitzenabschnittes und dem durchgehenden Verlauf des Schraubgewindes vom vorderen ersten zum sich anschließenden zweiten Spitzenabschnitt der Schraubenspitze, wird einerseits ein leichtes Eindringen der Schraube ermöglicht und andererseits greift das durchgehend verlaufende Gewinde sofort beim Eindringen des vorderen konischen Bereichs und die nicht unterbrochene, durch das Gewinde axiale Krafteinwirkung unterstützt den Schneideffekt der radial gerichteten Stirnflächenkante des polygonen Abschnittes und ermöglicht somit ein leichtes weiteres Eindringen des erfindungsgemäßen Schraubelementes in das jeweilige Material. Durch die Ausgestaltung des vorderen konisch verlaufenden Abschnittes mit einem maximalen Durchmesser, der kleiner ist als der Hüllkreisdurchmesser des sich anschließenden polygonalen Abschnittes, wird ein leichtes Eindringen in das jeweilige Material ermöglicht. Auch hierdurch wird der Spleißeffekt wesentlich reduziert. Erfindungsgemäß ist es von Vorteil, wenn der vordere, sich verjüngende Spitzenabschnitt als Spitzkegel ausgebildet ist und einen Kegelwinkel von 10 ° bis 40 °, insbesondere 20 ° aufweist. Hierbei ist es zweckmäßig, wenn die Teillänge des kegelförmigen vorderen Spitzenabschnittes in einem Bereich vom 0,8- bis 2,0-fachen der Gewindesteigung des Schraubgewindes des erfindungsgemäßen Schraubelementes beträgt. Die erfindungsgemäße Ausgestaltung des kegelförmigen Abschnittes der Gewindespitze unterstützt ein leichtes Eindringen des erfindungsgemäßen Schraubelementes in das jeweilige Material auf Grund des kleinen Kegelwinkels und des im Vergleich zum Durchmesser des Schraubenschaftes verringerten Durchmessers. Der sich an den kegelförmigen Abschnitt anschließende polygonale Spitzenabschnitt besitzt vorzugsweise einen Hüllkreisdurchmesser, der größer/gleich einem maximalen Kerndurchmesser des im Querschnitt kreisförmigen Gewindeschaftes ist. Hierdurch wird erreicht, dass durch die am polygonalen Spitzenabschnitt ausgebildeten, bevorzugt parallel zur mittleren Längsachse verlaufenden Kernkanten das durch die in Einschraubrichtung vordere als Schneidkante wirkende Stirnflächenkante erzeugte Schraubloch nicht auf Grund einer Rückfederung des jeweiligen Materials, in das das erfindungsgemäße Schraubelement eingeschraubt wird, sich wieder verengen kann. Denn das eventuell zurückgefederte Material wird radial verdrängt bzw. durch die gebildeten Kernkanten entfernt, so dass der sich an den polygonalen Spitzenabschnitt anschließende Schraubenschaft ohne großen Widerstand in das durch die Schraubenspitze erzeugte Bohrloch eindringen kann.

Weitere vorteilhafte Ausführungen sind in den Unteransprüchen enthalten und werden an Hand der in den folgenden Zeichnungen dargestellten Ausführungsbeispiele näher erläutert. Es zeigen:
- Fig. 1: eine perspektivische Ansicht eines erfindungsgemäßen Schraubelementes,
- Fig. 2: eine perspektivische Ansicht des Schraubelementes gemäß Fig. 1, jedoch ohne Schraubgewinde,
- Fig. 3: einen Längsschnitt durch Fig. 2, jedoch ohne Schraubkopf,
- Fig. 3a bis Fig. 3c: Schnittansichten gemäß den Schnittlinien A-A, B-B und C-C in Fig. 3,
- Fig. 4, Fig. 5 und Fig. 6: Schnitte durch alternative Ausführungsformen des polygonalen Spitzenabschnittes des erfindungsgemäßen Schraubelementes,
- Fig. 7: eine Seitenansicht des erfindungsgemäßen Schraubelementes gemäß Fig. 1,
- Fig. 7a bis Fig. 7c: Schnitte durch das erfindungsgemäße Schraubelement gemäß Fig. 7 entlang den Schnittlinien A-A, B-B und C-C,
- Fig. 8: eine Seitenansicht des Schraubelementes gemäß Fig. 7, jedoch in einer gegenüber der Stellung in Fig. 7 um 45 ° gedrehten Stellung,
- Fig. 8a bis Fig. 8c: Schnittdarstellungen entlang der Schnitte A-A, B-B und C-C in Fig. 8,
- Fig. 9: eine perspektivische Ansicht einer weiteren Ausbildungsform eines erfindungsgemäßen Schraubelementes,
- Fig. 10: eine perspektivische Ansicht des erfindungsgemäßen Schraubelementes gemäß Fig. 9, jedoch ohne Schraubgewinde.

In den verschiedenen Figuren der Zeichnung sind gleiche Teile stets mit denselben Bezugszeichen versehen.

Ein erfindungsgemäßes Schraubenelement 1 umfasst, wie in den Figuren dargestellt ist, einen Gewindeschaft 2 und eine an dessen einem Ende ausgebildete Schraubenspitze 4 sowie an einen der Schraubenspitze 4 gegenüberliegenden Ende einen Schraubenkopf 5, der einen Kraftangriff 7 für ein Drehwerkzeug aufweist. Der Schraubenkopf 5 kann beispielsweise als Senkkopf, Rundkopf oder Flachkopf ausgebildet sein, auch kann der Schraubenkopf 5 als zylindrische Verlängerung des Gewindeschaftes 2 geformt sein. Der Kraftangriff 7 kann als Schlitz-, Kreuzschlitz- oder als Innenkraftangriff beispielsweise in Form eines Innensechskant oder Innensterns oder aber auch z. B. als Außensechskant am Schraubenkopf 5 ausgebildet sein.

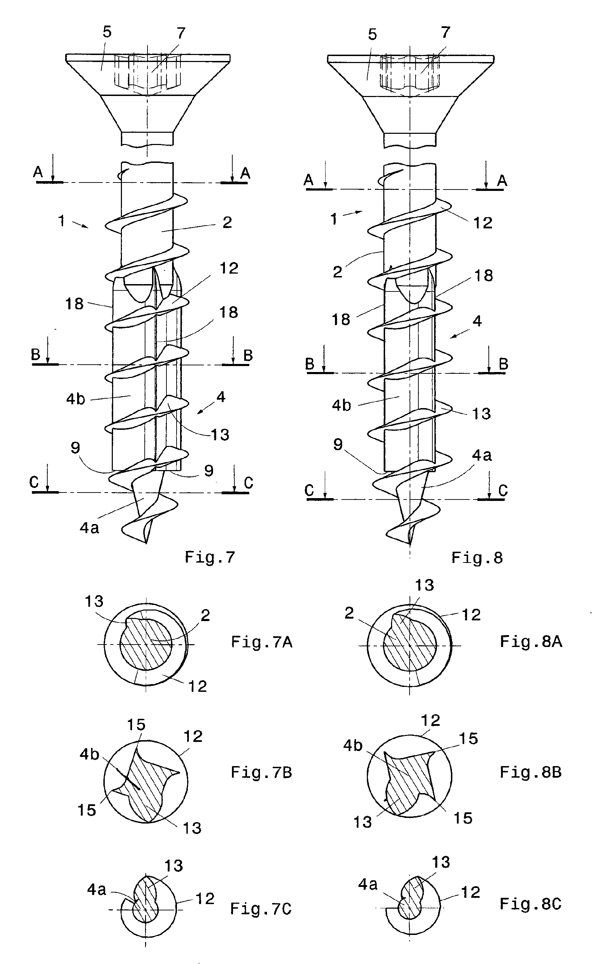

Auf dem Gewindeschaft 2 und auf der Schraubenspitze 4 verläuft ein Schraubgewinde 12. Das Gewinde wird vorzugsweise aus einem schraubenlinienförmig verlaufenden Gewindegang 13 gebildet, der z. B. im Querschnitt dreieckförmig ausgebildet ist, siehe Fig. 7, 8. Es liegt ebenfalls im Rahmen der Erfindung, wenn das Gewinde 12 als mehrgängiges Gewinde, beispielsweise aus zwei umfangsgemäß versetzt angeordneten schraubenlinienförmigen Gewindegängen ausgebildet ist.

Das Schraubgewinde 12 ist vorteilhafterweise als selbstschneidendes bzw. selbstformendes Gewinde ausgebildet. Das Gewinde 12 kann eine konstante Gewindesteigung oder aber eine variable Gewindesteigung über den gesamten Gewindebereich aufweisen. Das Gewinde 12 weist einen maximalen Gewindedurchmesser d_{g}, den Nenndurchmesser des erfindungsgemäßen Schraubenelementes, auf, der im dargestellten Ausführungsbeispiel im Bereich des Gewindeschaftes konstant ist, so dass in diesem Bereich keine Veränderung des Gewindedurchmessers vorhanden ist. Die Gewindesteigung des Schraubgewindes beträgt vorzugsweise 40 % bis 70 % des Nenndurchmessers d_{g} des Schraubgewindes, und zwar bezogen auf ein eingängiges Gewinde.

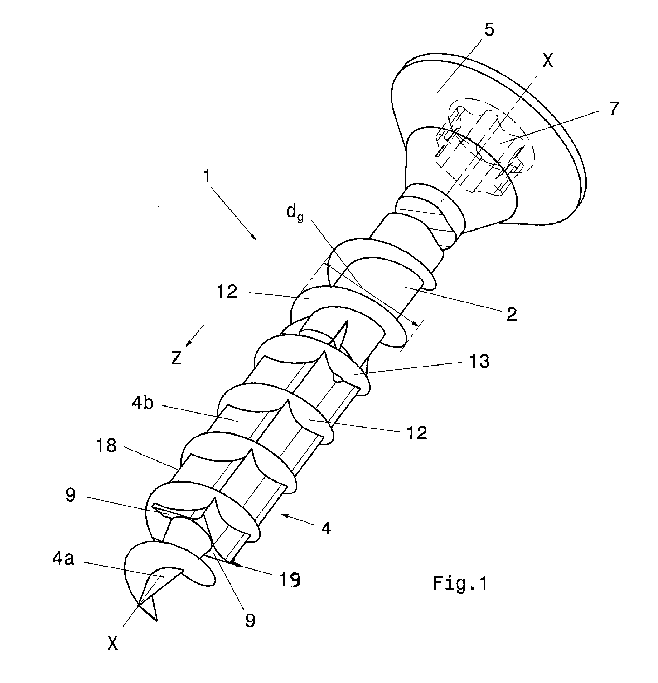

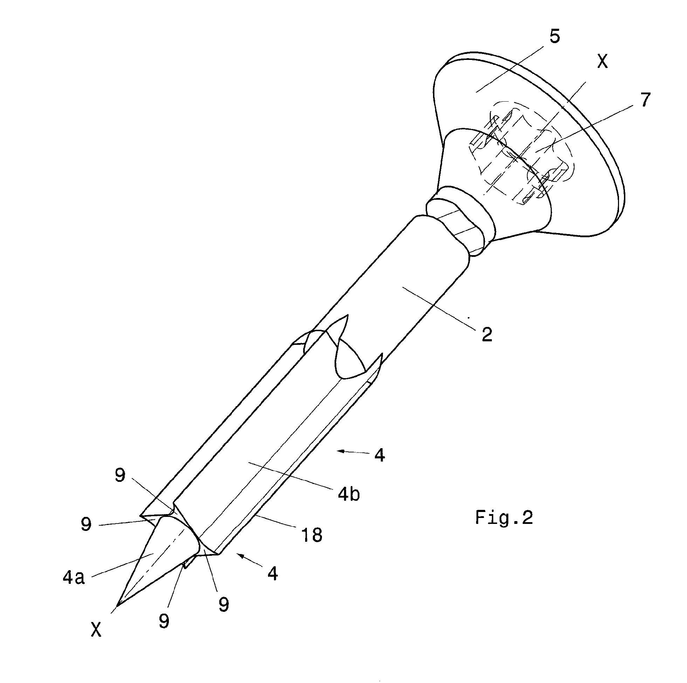

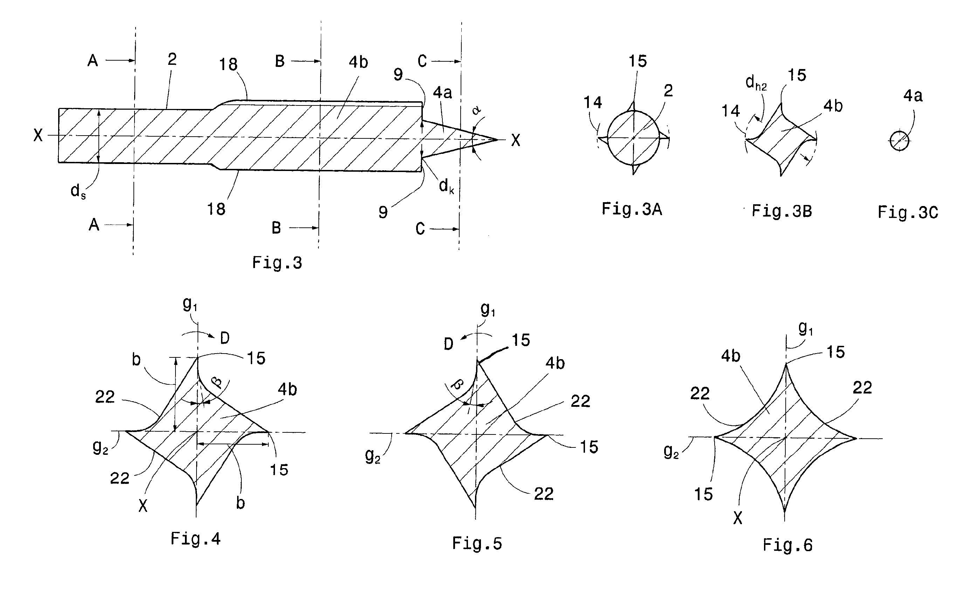

Die Schraubenspitze 4 besteht erfindungsgemäß aus zwei Spitzenabschnitten 4a und 4b, und zwar den in Einschraubrichtung Z gesehen vorderen ersten, sich zum Schraubelementende hin verjüngenden Spitzenabschnitt 4a und den daran anschließenden zweiten Spitzenabschnitt 4b. Der Spitzenabschnitt 4b besitzt einen im Querschnitt senkrecht zu einer Längs-Mittelachse X-X gesehen polygonalen Querschnitt seines Kerns mit einem durch seine Polygonecken verlaufenden Hüllkreis 14 mit einem Durchmesser dₕ, siehe Fig. 3b. Der erste Spitzenabschnitt 4a ist vorzugsweise als Spitzkegel ausgebildet, wie in Fig. 1 dargestellt ist, wobei sein Kegelwinkel α 10 ° bis 40 °, insbesondere 20 ° betragen kann, siehe Fig. 3. Der kegelförmige erste Spitzenabschnitt 4a weist einen in Bezug auf die mittlere Längsachse X-X senkrecht verlaufenden kreisförmigen Kernquerschnitt auf. Das Schraubgewinde 12 verläuft über die gesamte Gewindespitze 4, wobei seine radiale Gewindehöhe bis zum Ende des kegelförmigen Abschnitts 4a bis auf Null abnimmt. Im Bereich des zweiten Spitzenabschnitts 4b, der im Querschnitt polygonförmig ausgebildet ist, verläuft vorzugsweise das Gewinde 12 mit konstanter Gewindehöhe, so dass auch im Bereich des Spitzenabschnittes 4b das Gewinde 12 den Gewindenenndurchmesser dg wie im Bereich des Gewindeschaftes 2 aufweist. Der Hüllkreis 14 des polygonalen Spitzenabschnittes 4b ist größer als der Kerndurchmesser dₖ des Schraubenkerns im Bereich des Spitzenabschnittes 4a, siehe Fig. 3. Erfindungsgemäß ist am Übergang zwischen dem ersten Spitzenabschnitt 4a zum zweiten Spitzenabschnitt 4b an dem zweiten Spitzenabschnitt 4b mindestens eine in Bezug auf die Längs-Mittelachse X-X radial gerichtete, und zwar im Sinne einer Durchmesservergrößerung in einem auf dem Hüllkreis des zweiten Spitzenabschnittes 4b liegenden Eckpunkt 15 des polygonalen Querschnittes endende Stirnkantenfläche 9 vorhanden. Diese radial verlaufende Stirnkantenfläche 9 bildet eine Art Schneid- bzw. Fräskante. Im dargestellten Ausführungsbeispiel besitzt der polygonale Querschnitt des zweiten Spitzenabschnittes 4b vier Eckpunkte 15, so dass sich vier Stirnkantenflächen 9 ausbilden, siehe Fig. 2, und zwar in Bezug auf den Umfang des erfindungsgemäßen Schraubelementes 1. Wie insbesondere aus Fig. 1 zu erkennen ist, verläuft das Schraubgewinde 12 über den ersten und zweiten Spitzenabschnitt 4a, 4b ohne Unterbrechung, so dass auch im Bereich der Stirnflächenkanten 9 das Schraubgewinde 12 ausgebildet ist. In Fig. 2, in der nur der Schraubenkern des erfindungsgemäßen Schraubelementes 1, und zwar der Schraubenkern im Bereich des Gewindeschaftes 2 sowie im Bereich der Gewindespitze 4, dargestellt ist, ist deutlich die Ausbildung der Stirnflächenkante 9 im Übergang vom ersten Spitzenabschnitt 4a zum zweiten Spitzenabschnitt 4b zu erkennen. Hierbei verlaufen die Stirnflächenkanten 9 radial zur Längsachse X-X. Vorteilhafterweise besitzt der Hüllkreis des zweiten Spitzenabschnittes 4b einen Durchmesser dₕ, der größer/gleich einem maximalen Kerndurchmesser dₛ des im Querschnitt kreisförmigen Gewindeschaftes 2 ist. Hierbei ist es von Vorteil, wenn der Hüllkreisdurchmesser des zweiten, im Querschnitt polygonen Spitzenabschnittes 4b über seine axiale Länge konstant ist. Wie den einzelnen Figuren zu entnehmen ist, ist der Durchmesser des spitzen kegelförmigen ersten Gewindeabschnittes 4a an seiner Grundfläche im Übergang zwischen dem ersten und dem zweiten Spitzenabschnitt 4a, 4b kleiner als der maximale Kerndurchmesser dₛ des Gewindeschaftes 2. Weiterhin ist erfindungsgemäß vorgesehen, dass das Schraubgewinde 12 im Bereich des zweiten Spitzenabschnittes 4b und ebenfalls auf dem Schaftabschnitt 2 einen größeren Außendurchmesser dg besitzt als der maximale Hüllkreisdurchmesser dₕ des polygonalen Spitzenabschnittes 4b.

In dem dargestellten Ausführungsbeispiel verläuft das Gewinde 12 über die gesamte Länge des Gewindeschaftes 2. Es liegt ebenfalls im Rahmen der Erfindung, wenn das Gewinde 12 nicht über die gesamte Länge des Gewindeschaftes 2 verläuft, sondern dass beispielsweise zwischen dem Gewindeabschnitt des Gewindeschaftes 2 und dem Schraubenkopf 5 ein gewindefreier Schaftabschnitt ausgebildet ist, so dass nur ein Teilgewinde auf dem Gewindeschaft 2 vorhanden ist.

Weiterhin kann es erfindungsgemäß von Vorteil sein, wenn die Teillänge des ersten Spitzenabschnittes 4a im Bereich von mindestens dem 0,8-fachen bis maximal dem 2,0-fachen der Steigung s des Gewindes 12 liegt.

Wie insbesondere den Fig. 3a bis 3c und 4 bis 6 zu entnehmen ist, ist der zweite Spitzenabschnitt 4b derart im Querschnitt polygonal ausgebildet, dass er ein Viereck bildet mit vier Eckpunkten 15. Hierbei ist es zweckmäßig, wenn die vier Eckpunkte 15 jeweils auf orthogonal zur mittleren Längsachse X-X verlaufenden, sich schneidenden Geraden g₁, g₂ des polygonalen Querschnittes liegen und jeweils von der Längsachse X-X den gleichen Abstand b besitzen. Hierbei ist es zweckmäßig, wenn - im Querschnitt gesehen - die die Eckpunkte 15 verbindenden Kernseiten 22 konkav ausgebildet sind, wie dies insbesondere in Fig. 6 zu erkennen ist. In den dargestellten Ausführungsbeispielen ist ein Viereck als polygonaler Querschnitt des Spitzenabschnittes 4b dargestellt, es kann aber ebenfalls ein dreieckiger Querschnitt gewählt sein oder ein Querschnitt, der mehr als vier Ecken aufweist. Bevorzugt wird ein regelmäßiger Querschnitt ausgebildet. Die in Längsrichtung des im Querschnitt polygonalen Spitzenabschnittes 4b hintereinanderliegenden Eckpunkte 15 der einzelnen Querschnitte liegen auf parallel zur mittleren Längsachse X-X verlaufenden Geraden, so dass sich gradlinige Kernkanten 18 bilden, und damit eine zusätzliche Fräswirkung besitzen können, sofern sich eine Rückverformung des Materials ergibt, in dem das erfindungsgemäße Schraubelement 1 eingeschraubt wird. Wie in Fig. 6 dargestellt ist, kann der polygonale viereckige Querschnitt des Spitzenabschnittes 4b jeweils um die orthogonalen Geraden g₁, g₂ klappsymmetrisch ausgebildet sein. In Fig. 4 ist eine davon abweichende Form dargestellt, wobei die Kernseiten 22 bzw. die daraus resultierenden Kernseitenflächen des gesamten Abschnitts derart ausgebildet sind, dass sich eine Unsymmetrie in Bezug auf die orthogonalen Geraden g₁, g₂ ergibt. In Fig. 4 ist eine Ausgestaltung dargestellt, bei der die in Drehrichtung zeigenden, von dem jeweiligen Eckpunkt 15 bzw. den Kernkanten 18 ausgehenden Seitenabschnitte bzw. Flächenabschnitte radial steil in Richtung auf die Längsachse X-X derart verlaufen, dass sie mit der jeweiligen durch den Eckpunkt 15 verlaufenden Geraden einen spitzen Winkel β < 20 ° einschließen und dann anschließend nahezu gradlinig zum in Drehrichtung folgenden Eckpunkt 15 verlaufen. In Fig. 4 ist eine derartige erfindungsgemäße Form für eine Drehrichtung D im Uhrzeigersein dargestellt, und in Fig. 5 ist eine entsprechende Form mit der Drehrichtung D entgegen dem Uhrzeigersinn dargestellt. In den Fig. 3 bis 3c ist eine polygonale Querschnittsform des Spitzenabschnittes 4b entsprechend Fig. 4 dargestellt. Eine entsprechende Querschnittsform des polygonalen Spitzenabschnittes 4b ist auch in den Fig. 7 und 8 gewählt. Durch die Ausbildung des polygonalen Querschnittes gemäß den Fig. 4 und 5 wird eine verbesserte Schneidwirkung bzw. Fräswirkung der Schneidkanten 18 erreicht, was für die Ausführungsform gemäß Fig. 4 gilt. Bei der Ausführungsform gemäß Fig. 5 wird demgemäß bewirkt, dass bei einer Drehrichtung D, die einer Drehbeaufschlagung beim Lösen einer erfindungsgemäßen Schraube vorhanden ist, einem Lösen ein höherer Widerstand entgegengesetzt wird.

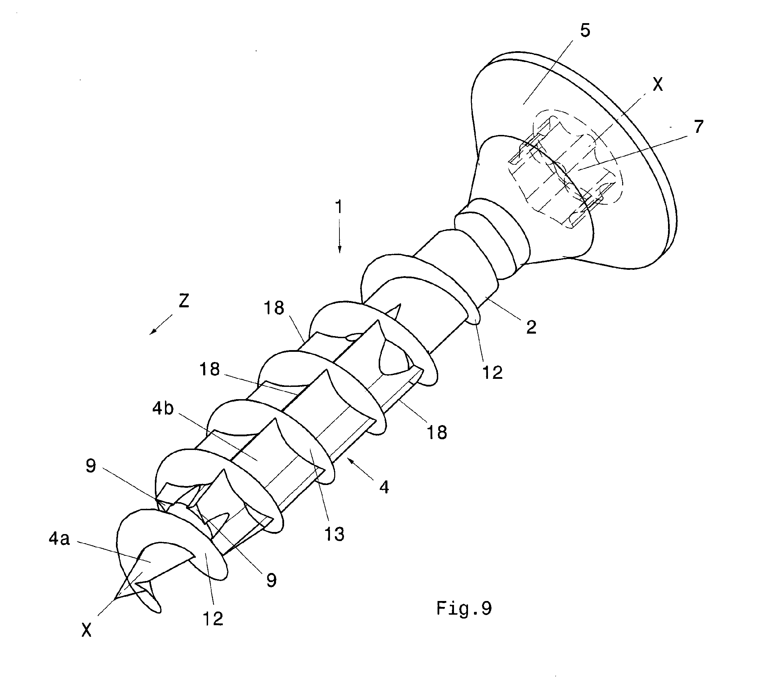

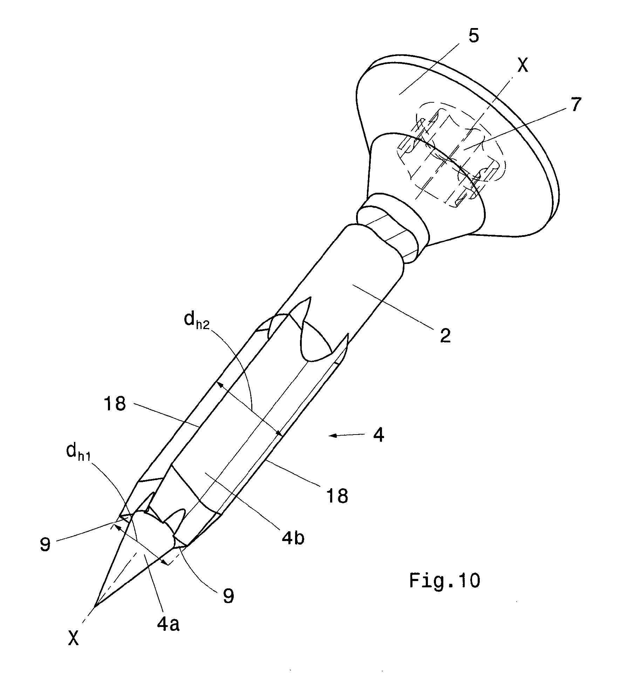

In den Fig. 9 und 10 ist eine Ausgestaltung eines erfindungsgemäßen Schraubelementes 1 dargestellt, das im Wesentlichen entsprechend dem Schraubelement 1 gemäß den Fig. 1 bis 8 entspricht, wobei jedoch insofern ein Unterschied besteht, dass der Hüllkreisdurchmesser dₕ des Hüllkreises 14 des polygonalen Spitzenabschnittes 4b nicht über die gesamte Länge des Spitzenabschnittes 4b konstant und gleich groß ist, sondern, dass der Hüllkreisdurchmesser dₕ beginnend mit einem Durchmesser dₕ₁ im Bereich der Stirnkantenflächen 9 in Richtung auf den Gewindeschaft 2 größer wird, und zwar bevorzugt kontinuierlich größer wird, bis zu dem maximalen Hüllkreisdurchmesser dₕ₂ im übrigen Bereich des polygonalen Spitzenabschnittes 4b. Hierbei beträgt die Länge, über die eine Zunahme des Hüllkreisdurchmessers dₕ bis zum maximalen Durchmesser erfolgt, vorzugsweise 10 % bis 50 % der gesamten Länge des polygonalen Spitzenabschnittes 4b. Die Durchmesserdifferenz zwischen dem Hüllkreisdurchmesser dₕ₁ im Bereich der Stirnflächenkante 9 und des maximalen Hüllkreisdurchmessers dₕ₂ im Bereich des polygonalen Spitzenabschnittes 4b, in dem ein konstanter Hüllkreisdurchmesser dₕ₂ vorhanden ist, beträgt 5 % bis 20 % des maximalen Hüllkreisdurchmessers dₕ.

Bei dem erfindungsgemäßen Schraubelement 1 verläuft, wie in den einzelnen Figuren dargestellt, die äußere Gewindekante des Gewindes 12 im Bereich des Gewindeschaftes 2 und auch über den polygonalen Spitzenabschnitt 4b hinweg mit konstantem Radius und konstanter Gewindehöhe. Über den Bereich des kegelstumpfförmigen Spitzenabschnittes 4a hinweg und bis zu dessen Ende verläuft der Gewindegang 13 spiralförmig mit kontinuierlich bis auf Null abnehmendem Radius und abnehmender Gewindehöhe.

In einer in den Zeichnungen nicht dargestellten, vorteilhaften Ausgestaltung kann zudem die Gewindekante des Gewindes 12 zumindest im Bereich des Gewindeabschnittes 4 und gleichzeitig im Bereich der Gewindeflankenfläche derart wellenförmig ausgebildet sein, das eine Folge von Wellenbergen und Wellentälern vorhanden ist. Hierzu wird im vollen Umfange auf das Dokument DE 3335092 A1 verwiesen.

### Bezugszeichenliste:

- 1: Schraubelement
- 2: Gewindeschaft
- 4: Schraubenspitze
- 4a: Spitzenabschnitt
- 4b: Spitzenabschnitt
- 5: Schraubenkopf
- 7: Kraftangriff
- 9: Stirnkantenfläche (Stirnflächenkante)
- 12: Schraubgewinde
- 13: Gewindegang
- 14: Hüllkreis
- 15: Eckpunkte
- 18: Kernkanten (Schneidkanten)
- 22: Kernseiten
- b: Abstand
- D: Drehrichtung
- dg: Gewindedurchmesser
- dₕ: Durchmesser des Hüllkreises
- dₕ₁: Durchmesser des Hüllkreises
- dₕ₂: Durchmesser des Hüllkreises
- dₖ: Kerndurchmesser von 4a
- dₛ: maximaler Kerndurchmesser des Gewindeschaftes 2
- g₁: orthogonale Geraden
- g₂: orthogonale Geraden
- X-X: Mittlere Längsachse
- Z: Einschraubrichtung

## Patentansprüche

1. Schraubelement (1), umfassend einen Gewindeschaft (2) und eine an einem Schaftende ausgebildete Schraubenspitze (4) und einen am gegenüberliegenden Schaftende ausgebildeten Schraubenkopf (5) mit einem Kraftangriff (7) und mit einem auf dem Gewindeschaft (2) und der Schraubenspitze (4) verlaufenden Schraubgewinde (12), wobei die Schraubenspitze (4) einen in Einschraubrichtung (Z) gesehen vorderen ersten, sich zum Schraubelementende hin verjüngenden Spitzenabschnitt (4a) und einen daran anschließenden zweiten Spitzenabschnitt (4b) mit einem im Querschnitt gesehen polygonalen Querschnitt aufweist, dessen Hüllkreisdurchmesser (dₕ) größer ist als ein Kerndurchmesser (dₖ) des ersten Spitzenabschnittes (4a),
**dadurch gekennzeichnet, dass** der erste Spitzenabschnitt (4a) einen kreisförmigen Querschnitt aufweist und am Übergang zwischen dem ersten Spitzenabschnitt (4a) zum zweiten Spitzenabschnitt (4b) an diesem mindestens eine in Bezug auf eine Längs-Mittelachse (X-X) im Sinne einer Durchmesservergrößerung radial gerichtete, in einem auf dem Hüllkreis (14) des zweiten Spitzenabschnittes (4b) liegenden Eckpunkt (15) des polygonalen Querschnitts endende Stirnkantenfläche (9), sowie, dass das Schraubgewinde (12) über den ersten und zweiten Spitzenabschnitt (4a, 4b) der Schraubenspitze (4) ohne Unterbrechung durchlaufend ausgebildet ist.

2. Schraubelement nach Anspruch 1,
**dadurch gekennzeichnet, dass** der Hüllkreis (14) des zweiten Spitzenabschnittes (4b) einen Durchmesser (dₕ) besitzt, der größer/gleich einem maximalen Kerndurchmesser (dₛ) des vorzugsweise im Querschnitt kreisförmigen Gewindeschaftes (2) ist.

3. Schraubelement nach Anspruch 1 oder 2,
**dadurch gekennzeichnet, dass** der Hüllkreisdurchmesser (dₕ) des zweiten Spitzenabschnittes (4b) der Schraubenspitze (4) über seine axiale Länge konstant ist.

4. Schraubelement nach Anspruch 1 oder 2,
**dadurch gekennzeichnet, dass** der zweite Spitzenabschnitt (4b) der Schraubenspitze (4) einen Hüllkreisdurchmesser (dₕ₁) am Übergang vom ersten Spitzenabschnitt (4a) zum zweiten Spitzenabschnitt (4b) besitzt, der kleiner ist als der Hüllkreisdurchmesser (dₕ₂), in dem dem Gewindeschaft (2) zugekehrten Ende des zweiten Spitzenabschnittes (4b).

5. Schraubelement nach einem der Ansprüche 1 bis 4,
**dadurch gekennzeichnet, dass** der erste Spitzenabschnitt (4a) als Spitzkegel mit einem Kegelwinkel (α) im Bereich von 10 ° bis 40 °, insbesondere 20 ° ausgebildet ist.

6. Schraubelement nach Anspruch 5,
**dadurch gekennzeichnet, dass** der Durchmesser (dₖ) des als Spitzkegel ausgebildeten ersten Spitzenabschnittes (4a) an seiner Grundfläche am Übergang zwischen dem ersten und zweiten Spitzenabschnitt (4a, 4b) kleiner ist als der maximale Kerndurchmesser (dₛ) des Gewindeschaftes (2).

7. Schraubelement nach einem der Ansprüche 1 bis 6
**dadurch gekennzeichnet, dass** das Schraubgewinde (12) im Bereich des zweiten Spitzenabschnittes (4b) und dem Schaftabschnitt (2) einen Außendurchmesser (dg) besitzt, der größer ist als der maximale Hüllkreisdurchmesser (dₕ) im Bereich des polygonalen Spitzenabschnittes (4b).

8. Schraubelement nach einem der Ansprüche 1 bis 7,
**dadurch gekennzeichnet, dass** die Teillänge des ersten Spitzenabschnittes (4a) das 0,8- bis 2,0-fache einer maximalen Gewindesteigung (S) des Schraubgewindes (12) beträgt, wobei vorzugsweise die Gewindesteigung (S) 40 % bis 70 % des maximalen Gewindedurchmessers (dg) bei einem eingängigen Gewinde beträgt.

9. Schraubelement nach einem der Ansprüche 1 bis 8,
**dadurch gekennzeichnet, dass** der Gewindeaußendurchmesser (dg) auf dem ersten Spitzenabschnitt (4a) vom Schraubelementende aus von 0 bis zum maximalen Gewindeaußendurchmesser (dg) auf dem zweiten Spitzenabschnitt (4b) ansteigt.

10. Schraubelement nach einem der Ansprüche 1 bis 9,
**dadurch gekennzeichnet, dass** der polygonale Querschnitt des polygonalen Spitzenabschnittes (4b) mindestens drei, vorzugsweise vier Eckpunkte (15) aufweist, die auf dem Hüllkreis (14) des polygonalen Spitzenabschnittes (4b) liegen.

11. Schraubelement nach Anspruch 10,
**dadurch gekennzeichnet, dass** die vier Eckpunkte (15) auf zwei sich in der mittleren Längsachse (X-X) orthogonal schneidenden Geraden (g₁, g₂) des polygonalen Querschnitts schneiden und jeweils von der Längsachse (X-X) den gleichen Abstand (b) besitzen.

12. Schraubelement nach Anspruch 10 oder 11,
**dadurch gekennzeichnet, dass** die vier Eckpunkte (15) des polygonalen Querschnitts des polygonalen Spitzenabschnittes (4b) jeweils in Längsrichtung hintereinanderliegend auf parallel zur mittleren Längsachse (X-X) verlaufenden Geraden angeordnet sind, so dass gradlinige Kernkanten (18) gebildet werden.

13. Schraubelement nach Anspruch 11 oder 12,
**dadurch gekennzeichnet, dass** die Eckpunkte (15) des polygonalen Querschnitts durch Kernseiten (22) verbunden sind, die eine derartige konkave Ausgestaltung aufweisen, dass ein polygonaler Querschnitt gebildet ist, der jeweils zu den durch die Eckpunkte (15) verlaufenden orthogonalen Geraden (g₁, g₂) klappsymmetrisch ausgebildet ist.

14. Schraubelement nach Anspruch 11 oder 12,
**dadurch gekennzeichnet, dass** die Kernseiten (22) die die Eckpunkte (15) des polygonalen Querschnitts verbinden, derart asymmetrisch in Bezug auf die durch die Eckpunkte (15) verlaufenden orthogonalen Geraden (g₁, g₂) ausgebildet sind, dass in Eindrehrichtung (D) oder in Ausdrehrichtung (D) eines erfindungsgemäßen Schraubelementes (1) eine erhöhte Schneid- bzw. Fräswirkung erzielt wird.

15. Schraubelement nach einem der Ansprüche 1 bis 14,
**dadurch gekennzeichnet, dass** das Gewinde (12) eine äußere Gewindekante aufweist, die in axialer Richtung der Mittel-Längsachse (X-X) gesehen spiralförmig und im Bereich des Gewindeschaftes (2) im konstanten Radius und über den Bereich der Schraubenspitze (4) hinweg spiralförmig mit kontinuierlich abnehmendem Radius verläuft.

## Claims

1. Screw element (1), comprising a threaded shank (2) and a screw tip (4), which is configured on one shank end, and a screw head (5), which is configured on the opposite shank end and has a force-application means (7), and having a screw thread (12) which runs on the threaded shank (2) and the screw tip (4), wherein the screw tip (4), when viewed in the screw-in direction (Z), has a front first tip portion (4a), which tapers off towards the end of the screw element, and a second tip portion (4b), which is adjacent to said first tip portion (4a), having, when viewed in the cross section, a polygonal cross section, the enveloping circle diameter (dₕ) of which is larger than a core diameter (dₖ) of the first tip portion (4a),
**characterized in that** the first tip portion (4a) has a circular cross section and, on the transition between the first tip portion (4a) and the second tip portion (4b), on the latter has at least one end edge face (9) which, in relation to a longitudinal centre axis (X-X), is radially oriented in the sense of a diameter enlargement and which terminates in a vertex (15) of the polygonal cross section, which lies on the enveloping circle (14) of the second tip portion (4b), and **in that** the screw thread (12) is configured without interruption over the first and second tip portions (4a, 4b) of the screw tip (4).

2. Screw element according to Claim 1,
**characterized in that** the enveloping circle (14) of the second tip portion (4b) has a diameter (dₕ) which is larger than/equal to a maximum core diameter (dₛ) of the threaded shank (2) which, in the cross section, is preferably circular.

3. Screw element according to Claim 1 or 2, **characterized in that**, over its axial length, the enveloping circle diameter (dₕ) of the second tip portion (4b) of the screw tip (4) is constant.

4. Screw element according to Claim 1 or 2, **characterized in that** the second tip portion (4b) of the screw tip (4), on the transition from the first tip portion (4a) to the second tip portion (4b), has an enveloping circle diameter (dₕ₁) which is smaller than the enveloping circle diameter (dₕ₂) **in that** end of the second tip portion (4b) which faces towards the threaded shank (2).

5. Screw element according to one of Claims 1 to 4, **characterized in that** the first tip portion (4a) is configured as a pointed cone having a cone angle (α) in the range of 10° to 40°, in particular 20°.

6. Screw element according to Claim 5,
**characterized in that** the diameter (dₖ) of the first tip portion (4a) configured as a pointed cone, on its base face on the transition between the first and second tip portions (4a, 4b), is smaller than the maximum core diameter (dₛ) of the threaded shank (2).

7. Screw element according to one of Claims 1 to 6, **characterized in that** the screw thread (12), in the region of the second tip portion (4b) and the shank portion (2), has an outer diameter (d_{g}) which is larger than the maximum enveloping circle diameter (dₕ) in the region of the polygonal tip portion (4b).

8. Screw element according to one of Claims 1 to 7, **characterized in that** the part-length of the first tip portion (4a) is 0.8 to 2.0 times a maximum thread lead (S) of the screw thread (12), wherein, in a one-start thread, the thread lead (S) is preferably 40% to 70% of the maximum thread diameter (dg).

9. Screw element according to one of Claims 1 to 8, **characterized in that** the thread outer diameter (d_{g}) increases on the first tip portion (4a), starting from the end of the screw element, from 0 to a maximum thread outer diameter (dg) on the second tip portion (4b).

10. Screw element according to one of Claims 1 to 9, **characterized in that** the polygonal cross section of the polygonal tip portion (4b) has at least three, preferably four, vertices (15) which lie on the enveloping circle (14) of the polygonal tip portion (4b).

11. Screw element according to Claim 10,
**characterized in that** the four vertices (15) intersect on two straight lines (g₁, g₂) of the polygonal cross section which intersect orthogonally on the central longitudinal axis (X-X) and in each case are at the same distance (b) from the longitudinal axis (X-X).

12. Screw element according to Claim 10 or 11, **characterized in that** the four vertices (15) of the polygonal cross section of the polygonal tip portion (4b) are in each case arranged so as to lie behind one another in the longitudinal direction on straight lines running parallel to the central longitudinal axis (X-X), such that straight core edges (18) are formed.

13. Screw element according to Claim 11 or 12, **characterized in that** the vertices (15) of the polygonal cross section are connected by core sides (22) which have a concave configuration in such a manner that a polygonal cross section, which, in relation to the orthogonal straight lines (g₁, g₂) running through the vertices (15), is in each case of a symmetrically folding configuration, is formed.

14. Screw element according to Claim 11 or 12, **characterized in that**, in relation to the orthogonal straight lines (g1, g2) running through the vertices (15), the core sides (22) which connect the vertices (15) of the polygonal cross section are asymmetrically configured in such a manner that, in the screwing-in direction (D) or the screwing-out direction (D) of a screw element (1) according to the invention, an increased cutting effect and/or milling effect is achieved.

15. Screw element according to one of Claims 1 to 14, **characterized in that** the thread (12) has an outer thread edge which, when viewed in the axial direction of the central longitudinal axis (X-X), runs helically and, in the region of the threaded shank (2), runs at a constant radius and, over the region of the screw tip (4), runs helically, at a continuously decreasing radius.

## Revendications

1. Élément de vis (1), comportant une tige filetée (2) et une pointe de vis (4) réalisée sur une extrémité de tige, et une tête de vis (5) réalisée à l'extrémité de tige opposée et dotée d'une zone d'application de force (7) et comprenant un filetage de vis (12) s'étendant sur la tige filetée (2) et la pointe de vis (4), la pointe de vis (4) comprenant une première portion de pointe (4a), située à l'avant vue dans la direction de vissage (Z), et se rétrécissant en direction de l'extrémité d'élément de vis, et une deuxième portion de pointe (4b) s'y raccordant, présentant une section transversale polygonale vue en section transversale, dont le diamètre de cercle enveloppant (dₕ) est supérieur à un diamètre de partie centrale (dₖ) de la première portion de pointe (4a),
**caractérisé en ce que** la première portion de pointe (4a) présente une section transversale circulaire et, à la transition entre la première portion de pointe (4a) et la deuxième portion de pointe (4b), et **en ce que**, sur cette au moins une surface d'arête frontale (9) orientée radialement par rapport à un axe médian longitudinal (X-X) au sens d'une augmentation de diamètre et se terminant par un point d'angle (15) de la section transversale polygonale situé sur le cercle enveloppant (14) de la deuxième portion de pointe (4b), le filetage de vis (12) est réalisé de manière continue sans interruption sur la première et la deuxième portion de pointe (4a, 4b) de la pointe de vis (4).

2. Élément de vis selon la revendication 1, **caractérisé en ce que** le cercle enveloppant (14) de la deuxième portion de pointe (4b) présente un diamètre (dₕ) qui est supérieur/égal à un diamètre de partie centrale maximal (dₛ) de la tige filetée (2) de préférence circulaire en section transversale.

3. Élément de vis selon la revendication 1 ou 2, **caractérisé en ce que** le diamètre de cercle enveloppant (dₕ) de la deuxième portion de pointe (4b) de la pointe de vis (4) est constant sur sa longueur axiale.

4. Élément de vis selon la revendication 1 ou 2, **caractérisé en ce que** la deuxième portion de pointe (4b) de la pointe de vis (4) présente, à la transition de la première portion de pointe (4a) à la deuxième portion de pointe (4b), un diamètre de cercle enveloppant (dₕ₁) qui est inférieur au diamètre de cercle enveloppant (dₕ₂), dans l'extrémité, tournée vers la tige filetée (2), de la deuxième portion de pointe (4b).

5. Élément de vis selon l'une quelconque des revendications 1 à 4,
**caractérisé en ce que** la première portion de pointe (4a) est réalisée sous forme de cône pointu présentant un angle de cône (α) dans la plage de 10° à 40°, en particulier de 20°.

6. Élément de vis selon la revendication 5, **caractérisé en ce que** le diamètre (dₖ) de la première portion de pointe (4a) réalisée sous forme de cône pointu est, au niveau de sa surface de base à la transition entre la première et la deuxième portion de pointe (4a, 4b), inférieur au diamètre de partie centrale maximal (dₛ) de la tige filetée (2).

7. Élément de vis selon l'une quelconque des revendications 1 à 6,
**caractérisé en ce que** le filetage de vis (12) présente, dans la région de la deuxième portion de pointe (4b) et de la portion de tige (2), un diamètre extérieur (dg) qui est supérieur au diamètre de cercle enveloppant maximal (dₕ) dans la région de la portion de pointe polygonale (4b).

8. Élément de vis selon l'une quelconque des revendications 1 à 7,
**caractérisé en ce que** la longueur partielle de la première portion de pointe (4a) vaut de 0,8 à 2,0 fois un pas de filetage maximal (S) du filetage de vis (12), le pas de filetage (S) valant de préférence de 40 % à 70 % du diamètre de filetage maximal (dg) en cas de filetage à un filet.

9. Élément de vis selon l'une quelconque des revendications 1 à 8,
**caractérisé en ce que** le diamètre extérieur de filetage (dg) sur la première portion de pointe (4a) augmente depuis l'extrémité d'élément de vis, à partir de 0 jusqu'au diamètre extérieur de filetage maximal (dg) sur la deuxième portion de pointe (4b).

10. Élément de vis selon l'une quelconque des revendications 1 à 9,
**caractérisé en ce que** la section transversale polygonale de la portion de pointe polygonale (4b) comprend au moins trois, de préférence quatre, points d'angle (15), lesquels se situent sur le cercle enveloppant (14) de la portion de pointe polygonale (4b).

11. Élément de vis selon la revendication 10, **caractérisé en ce que** les quatre points d'angle (15) se croisent sur deux droites (g₁, g₂), se croisant orthogonalement au niveau de l'axe longitudinal médian (X-X), de la section transversale polygonale et présentent respectivement la même distance (b) à l'axe longitudinal (X-X).

12. Élément de vis selon la revendication 10 ou 11, **caractérisé en ce que** les quatre points d'angle (15) de la section transversale polygonale de la portion de pointe polygonale (4b) sont disposés respectivement les uns derrière les autres dans la direction longitudinale sur des droites s'étendant parallèlement à l'axe longitudinal médian (X-X), de telle sorte que des arêtes de partie centrale rectilignes (18) soient formées.

13. Élément de vis selon la revendication 11 ou 12, **caractérisé en ce que** les points d'angle (15) de la section transversale polygonale sont reliés par des côtés de partie centrale (22) qui présentent une configuration concave telle qu'une section transversale polygonale est formée, laquelle est réalisée respectivement de manière symétrique par rabattement par rapport aux droites (g₁, g₂) orthogonales passant par les points d'angle (15).

14. Élément de vis selon la revendication 11 ou 12, **caractérisé en ce que** les côtés de partie centrale (22) qui relient les points d'angle (15) de la section transversale polygonale sont réalisés de manière asymétrique par rapport aux droites (g₁, g₂) orthogonales passant par les points d'angle (15), de telle sorte qu'une action de coupe ou de fraisage accrue soit obtenue dans le sens de vissage (D) ou dans le sens de dévissage (D) d'un élément de vis (1) selon l'invention.

15. Élément de vis selon l'une quelconque des revendications 1 à 14,
**caractérisé en ce que** le filetage (12) présente une arête de filetage extérieure qui s'étend en forme de spirale vue dans la direction axiale de l'axe longitudinal médian (X-X) et, dans la région de la tige filetée (2), s'étend avec un rayon constant et, sur la région de la pointe de vis (4), s'étend en forme de spirale avec un rayon diminuant de manière continue.
